## Europäisches Patentamt

## European Patent Office

## Office européen des brevets

(11) Veröffentlichungsnummer: **0 029 093**
**B2**

(12) **NEUE EUROPÄISCHE PATENTSCHRIFT**

(45) Veröffentlichungstag der neuen Patentschrift:
**26.11.86**

(21) Anmeldenummer: **80105211.9**

(22) Anmeldetag: **02.09.80**

(51) Int. Cl.⁴: **F 16 C 3/02,** B 29 D 23/00

(54) Antriebswelle aus faserverstärktem Kunststoff, mit festgewickelten Endstücken.

(30) Priorität: **17.11.79 DE 2946530**

(43) Veröffentlichungstag der Anmeldung:
**27.05.81 Patentblatt 81/21**

(45) Bekanntmachung des Hinweises auf die Patenterteilung:
**01.02.84 Patentblatt 84/5**

(45) Bekanntmachung des Hinweises auf die Entscheidung
über den Einspruch:
**26.11.86 Patentblatt 86/48**

(84) Benannte Vertragsstaaten:
**BE FR GB IT NL SE**

(56) Entgegenhaltungen:
**DE-U-1 923 179**
**FR-A-2 343 918**
**FR-A-2 348 393**
**FR-A-2 371 598**
**GB-A-2 008 484**
**US-A-2 614 058**
**US-A-3 553 978**

(73) Patentinhaber: **Felten & Guilleaume**
**Energietechnik GmbH, Schanzenstrasse 24,**
**D-5000 Köln 80 (DE)**

(72) Erfinder: **Federmann, Helmut, Dr., Holunderweg**
**17, D-5060 Berg. Gladbach (DE)**
Erfinder: **Bausch, Joachim, Dr.- Ing., Steeger**
**Höhe 16, D-5057 Dürscheid (DE)**

EP 0 029 093 B2

## Beschreibung

Die Erfindung bezieht sich auf eine Antriebswelle aus faserverstärktem Kunststoff, gemäß dem Oberbegriff des Anspruchs 1. Sie findet besonders Anwendung bei Gelenkwellen für Motorfahrzeuge, wie Kardanwellen oder dergleichen.

Es ist schon aus DE-A-2851 292 eine im wesentlichen aus faserverstärktem Kunststoff bestehende Kardanwellenkonstruktion und ein Verfahren zu deren Herstellung bekanntgeworden, bei welcher jeweils mit einem Jochteil und einem Verankerungsteil einstückig vorgefertigte Endstücke aus Metall vorgesehen sind. Diese werden zur Herstellung der Welle auf die Enden eines ebenfalls vorgefertigten, rohrförmigen, Einwegdornes aufgesetzt, und danach einschließlich des dazwischen befindlichen Einwegdornes mit faserverstärktem Kunststoff umwickelt. Nach dessen Aushärtung oder Vulkanisation sind die Endstücke darin fest verankert, so daß sie mit dem so entstandenen Hauptteil der Welle eine untrennbare Einheit bilden. Jedes dei Jochteile dieser Kardanwellenkonstruktion kann mittels eines Kreuzgeienkbolzens mit einem zugehörigen Anschlußjochteil zu einem Kardangelenk zusammengeschlossen werden.

Gegenüber den üblichen Gelenkwellen wie insbesondere Kardanwellen aus Stahl besitzt diese Kardanwellenkonstruktion neben einem besseren Schwingungsverhalten den Vorteil eines geringeren Gewichtes, wodurch sich das Leistungsgewicht der gesamten Einheit und dementsprechend auch der Brennstoffverbrauch bei gleicher Leistung verringert. Sie weisen jedoch den Nachteil eines erhöhten Fertigungs-, insbesondere Lagerhaltungsaufwandes zufolge der Notwendigkeit auf, für jeden Motorentyp passende Kardanwellen gesondert anzufertigen bzw. auf Lager zu halten.

Die Erfindung geht hingegen von einer anderen bekannten Kardanwellenkonstruktion aus, die in DE-A-2851 293 nebst einem Verfahren zu deren Herstellung gezeigt und beschrieben ist. Bei dieser bekannten Kardanwelle sind als Endstücke zylinderringförmig vorgefertigte Buchsen aus Metall mit dem wesentlichen Teil ihrer Länge in den Endbereichen eines aus glasfaserverstärktem Kunststoff bestehenden Hohlwellenteiles so festgesetzt, daß nur ein querschnittsgleicher Teil derselben vorragt. Dieser ist für die unmittelbare oder, z. B. über ein als konischer Ring mit Zentrieransatz ausgeführtes Zwischenglied, mittelbare Befestigung einer Verbindungseinrichtung wie Jochteil eines Kreuzgelenkes mittels einer umfänglichen Schweißnaht vorgesehen.

Zur Herstellung dieser bekannten Kardanwelle werden die vorgefertigten Buchsen mit der Länge der Welle entsprechendem gegenseitigen Abstand auf einen Dorn aufgebracht; sodann en Dorn und mindestens einen Teil ner jeder dieser Buchsen eine glasfaserverstärkte Beschichtung aufgetragen, nach deren durch Wärmeanwendung erfolgender Aushärtung die so weit fertige Welle vom Dorn abgezogen, hiernach mit den Verbindungseinrichtungen verschweißt und schließlich, z, B. mittels in die vorragenden Buchsenteile eingesetzter Gewichte, ausgewuchtet wird.

Nachteilig ist hierbei die Schwierigkeit, die Buchsen ohne komplizierte Einrichtungen des Dornes so mit dem vorgefertigten Abstand auf diesem festzulegen, daß die fertige Welle hiernach ohne Beschädigung des Dornes problemlos abgezogen werden kann, Weshalb Wegwerfdorne eingesetzt werden, die jedoch ohne selbst zur mechanischen Festigkeit der Welle beizutragen - deren Fertigungskosten und Gewicht erhöhen. Nachteilig ist ferner, daß durch einfaches Auftragen der glasfaserverstärkten Kunststoffbeschichtung auf den Dorn und die Buchsen nach der Hartung dieser Beschichtung die mechanische Festigkeit einer solchen Welle, insbesondere deren Torsionsund Biegefestigkeit, nicht in dem entsprechend dem Verwendungszweck als Antriebswelle erforderlichen hohen Maße gewährleistet werden kann, sondern hierzu eine besondere Struktur der vorwiegend in Wickelvorgängen aufgebrachten kunststoffimprägnierten Fasern bzw. Faserverbände erforderlich ist.

Ein wesentlicher Nachteil dieser bekannten Welle ist jedoch die relativ schwache, vorwiegend durch Adhäsionskräfte bewirkte Verankerung der Buchsen in den Endbereichen der eigentlichen Verbundstoffwelle, deren freiliegende, empfindliche Stirnflächen schutzlos den Einflüssen der Umgebung ausgesetzt sind, sowie der mehrfache abrupte Übergang vom im wesentlichen gleichbleibenden Querschnitt jeder der metallenen Endbuchsen auf jenen des eigentlichen Wellenteiles, dessen Querschnitt wiederum am inneren Ende jeder Buchse, also gerade an jener kritischen Stelle der Welle, an welcher das Drehmoment im wesentlichen von den Buchsen auf die eigentliche Welle übertragen wird, sich mit einem die Festigkeit erheblich mindernden Knick verringert. Dies bewirkt örtlich überhöhte Schubspannungen, was zu einer Zerstörung der Welle in diesem kritischen Ubergangsbereich führen kann.

Daher mangelt es dieser bekannte welle aus faserverstärktem Kunststoff, neben der erforderlichen Beschaffenheit ihrer inneren und äußeren Oberfläche, vor allem an der notwendigen Zug-, Druck-, und Scheer- und somit Biege- und Torsionsfestigkeit, um den naturgemäß sehr hohen mechanischen Beanspruchungen beim bestimmungsgemäßen Einsatz derselben dauerhaft widerstehen zu konnen. Dies kann aber nach relativ kurzem Einsatz zu deren Zerstörung insbesondere durch Abriß in den kritischen Übergangsbereichen oder durch Lockerung bzw. Lösung der anschließend festgesetzten Buchsen führen.

Der Erfindung liegt die Aufgabe zugrunde, eine Antriebswelle aus faserverstärktem Kunststoff anzugeben, die unter Beibehaltung der angegebenen Vorteile solcher bekannter Antriebswellen ebenso wie diese für verschiedene Zwecke leicht unterschiedlich ausgerüstet werden kann, jedoch wesentlich größere mechanische Festigkeit als solche bekannte Wellen, besonders an den Wellenenden und den Übergangsbereichen der darin verankerten metallenen Endstücke zum Wellen-Hauptteil aus faserverstärktem Kunststoff aufweist. Die Lösung dieser Aufgabe ist mit der im Anspruch 1 gekennzeichneten Erfindung angegeben.

Dabei ist das Teilmerkmal a) im wesentlichen aus der FR-A-2 348 393 bekannt. Dort wird eine rohrförmige Antriebswelle aus Kohlenstoff-Fasern in einer Matrix aus gehärtetem Kunststoff beschrieben, bei der die Fasern in den innersten und äußersten Wickellagen im wesentlichen umfänglich, mit einem Steigungswinkel von 85° bis 90° zur Wellenachse angeordnet sind, hingegen in den Zwischenlagen spiralförmig, mit einem Steigungswinkel von 15° bis 50°. Dabei sind die spiralförmigen Lagen so angeordnet, daß sich die Fasern einer Lage mit denen der vorhergehenden mit einem Winkel von 30° bis 90° kreuzen. Diese Antriebswelle ist aber nur als Rohr ohne Endstücke ausgebildet.

Und die Teilmerkmale b) und c) sind im wesentlichen aus der US-A-3 553 978 bekannt. Dort wird eine Antriebswelle in Verbundbauweise beschrieben, bei welcher der vorragende Abschnitt eines jeden Endstücks als Ringteil ausgebildet ist, das gegenüber seinem nichtvorragenden Hülsenfortsatz einen größeren Außendurchmesser hat, an dessen innerer Stirnfläche die in der Kunststoff-Matrix eingekapselten Fasern anliegen. Die Ringteile der Endstücke haben etwa den gleichen Außendurchmesser wie die Welle, und ihre inneren Stirnflächen dienen als endseitiger Abschluß der Kunststoff/Faserlagen. Hier handelt es sich aber nicht um eine hohle Welle mit hohlzylindrischen Endstücken, sondern um eine volle Welle mit kegelförmigen Endstücken. Und die Welle selbst besteht aus einem steifen, zylindrischen Stamm aus Polyurethan-Schaum, der die beiden Endstücke verbindet. Zudem ist sie nur von einem dünnen Rohr aus in gehärtetem Kunststoff eingelagerten Glasfasern umgeben, das an den Ringteilen der Endstücke anliegt. Diese Welle hat gegenüber der erfindungsgemäßen Welle eine bedeutend geringere mechanische Festigkeit.

Weitere Ausgestaltungen der erfindungsgemäßen Antriebswelle sind mit den Ansprüchen 2 bis 6 umrissen, und ein Verfahren zur Herstellung einer solchen Antriebswelle ist mit zwei Varianten in den Ansprüchen 7 und 8 angegeben.

Die neue Antriebswelle vereinigt in sich die Vorteile der üblichen Stahlwellen mit jenen der vorausgehend beschriebenen Kardanwellenkonstruktionen aus faserverstärktem Kunststoff. Ebenso wie diese besitzt sie ein wesentlich geringeres Gewicht als Stahlwellen, wobei sich aber ihre Enden nicht nur in der bislang üblichen Weise mit vorgefertigten Verbindungseinrichtungen oder Anschlußteilen, wie etwa ein genuteter Wellenstummel oder ein Jochteil, eines Kreuzgelenkes durch umfängliche Schweißung fest verbinden lassen sondern auch eine mit den bekannten Stahlwellen vergleichbare mechanische Festigkeit besitzen. Auch kann sie durch den Einbau eines Adapterteiles ebenso gut an Verbindungseinrichtungen unterschiedlicher Abmessungen oder auch unterschiedlichen Querschnittes angepaßt werden. Weitere Vorteile sind neben der großen Festigkeit der Verbindung ihrer Endstücke mit dem aus faserverstärktem Kunststoff erstellten Hauptteil der Welle die besondere Formgebung des Hülsenfortsatzes ihrer Endstücke für einen allmählichen Übergang im Querschnitt und dementsprechend des so übertragenen Drehmomentes von den metallenen Endstücken zum Hauptteil, wodurch die Schubspannung im ganzen Bereich der Verbindung konstant ist.

Ihr geringes Gewicht gestattet den im wesentlichen schwingungsfreien Einsatz mit viel größerer als der bisher üblichen Länge, wobei sich die bislang erforderliche Anordnung eines Zwischenlagers mit entsprechender Unterteilung der Antriebswelle erübrigt. So verbindet die neue Welle mit einem Stück zum Beispiel den Ausgang eines Schaltgetriebes im vorderen und eines Differenzialgetriebes im hinteren Bereich eines Motorfahrzeuges. Hierbei ist in jedem dieser Bereiche ein entsprechendes Kreuzgelenk angeordnet, dessen eines Jochteil an dem betreffenden Wellenende befestigt bzw. auf einen genuteten Wellenstummel des anderen Endes drehfest aufschiebbar ist. Das Gesamtgewicht der neuen Antriebswelle läßt sich auch noch durch Verwendung leichter Metalle, wie etwa einer speziellen Aluminiumlegierung für die vorgefertigten Endstücke und der an diese anzuschließenden Verbindungseinrichtungen sowie gegebenenfalls auch der Adapterteile weiter verringern.

Das zur Herstellung dieser Antriebswelle aus faserverstärktem Kunststoff angewendete neue Verfahren ermöglicht eine gegenüber dem bisherigen wesentlich vereinfachte und somit wirtschaftlichere Fertigung. Hierzu werden auf einen zur Rotation antreibbaren, zylindrischen Dorn die vorgefertigten Endstücke im Abstand aufgeschoben und daran drehfest gehaltert. Dies kann durch gezielte Wärmeanwendung erfolgen, wobei der Dorn nach dem Aufschieben der Endstücke erwärmt und vor dem Abziehen, der Antriebswelle gekühlt wird.

Sodann werden Prepregs-Fasern oder mit einem zähflüssigen, durch Wärmeeinwirkung aushärtbaren Kunststoff getränkte, hochfeste fasern bzw. Faserverbände wie Bündel, Gewebe oder Vliese auf die zwischen den Endstücken frei belassene Dornoberfläche sowie auf die einzufassenden Endstückabschnitte in mehreren, zur Drehachse unterschiedlich geneigten Lagen aufgebracht. Hierbei ist es besonders vorteilhaft, wenn die mit dem härtbaren Kunststoff getränkten Fasern oder Faserverbände in eng aufeinanderfolgenden Windungen in den innersten und äußersten Wickellagen mit möglichst geringer Steigung gewickelt werden. Auf diese Weise lassen sich alle der Verankerungen dienenden Unebenheiten wie etwa die Ringnut jedes der metallenen Endstücke mit sehr guter Haftung ausfüllen und ein allmählicher Übergang auf deren Hülsenfortsatz aufbauen, wobei das endseitig vorragende Ringteil dieser Endstücke mit seiner inneren Stirnfläche zugleich als Begrenzung und seitlicher Abschluß der Bewikkelung dient. Die ebenso gewickelte äußerste Lage der kunststoffgetränkten Fasern bildet eine die darunter befindlichen Zwischenlagen derselben fest umschließende, gleichmäßige Oberflächenschicht der so gefertigten Welle.

Bei der Herstellung der Zwischenlagen werden die getränkten Fasern oder Faserverbände mit einer Steigung zwischen 30° und 60° aufgebracht, wobei die Fasern in aufeinanderfolgenden Zwischenlagen gegenläufig, mit die Windungen der zuvor gewickelten Lage kreuzenden Windungen gewickelt werden. Als besonders vorteilhaft hat sich das Bewickeln mit einem Steigungswinkel von 45° erwiesen, wobei also aufeinanderfolgende Zwischenlagen mit einander senkrecht kreuzenden Windungen gewickelt werden. Mit Vorteil kann ferner nach dem Aufbringen von wenigstens zwei Wickellagen, mit einander kreuzenden Windungen jeweils eine Lage eines mit dem härtbaren Kunststoff getränkten Faservlieses oder eines Gewebes aus den hochfesten Fasern aufgebracht werden, auf das wiederum weitere Lagen getränkter Fasern oder Faserverbände mit einander kreuzenden Windungen aufgewickelt werden.

Dieser Aufbau des Hauptteiles der Welle aus faserverstärktem Kunststoff gewährleistet nach dessen Aushärtung in besonders hohem Maße die erforderliche mechanische Festigkeit, wie insbesondere Scheer- und Biegefestigkeit der Welle sowie die absolut drehfeste Verankerung der metallischen Endstücke in den Wellenenden. Von diesen ragen nur die etwa den gleichen Außendurchmesser wie die Welle aufweisenden Ringteile der metallenen Endstücke vor und bilden einen festen Abschluß, so daß die empfindlichen Stirnflächen des so gebildeten Wellenhauptteiles, bestehend aus in einer Matrix aus gehärtetem Kunststoff eingekapselten hochfesten Fasern, z. B. aus Glas, fest auch an der inneren Stirnfläche jedes der Endstücke verhaftet und durch diese vor äußeren Einflüssen geschützt sind.

Die faserverstärkten Kunststofflagen werden bei Verwendung von Prepregs-Fasern unmittelbar beim Aufbringen, und bei sonstigem faserverstärktem Kunststoffmaterial nach Abschluß des Wickelvorganges bis zur Aushärtung des Kunststoffes erhitzt und sodann als fertige Welle von dem hierzu gegebenenfalls gekühlten Dorn abgezogen. Für die Fasertränkung werden aushärtbare, im Ausgangsstadium flüssige, insbesondere zähflüssige Kunststoffmassen auf Polyester-, Vinylester-, oder Epoxydharzbasis oder sonstige aus der Faserwickeltechnik bekannte Kunststoffe verwendet, welche im ausgehärteten Zustand eine die Fasern verkapselnde Matrix bilden. Diese wird durch die darin eingekapselten Fasern wie Glas- oder Kohlefasern bzw. hochfeste Kunststoffasern, wie etwa auf der Basis von m-Phenyldiamin und Terephthalsäure erstellte aromatische Polyamide, die unter dem Handelsnamen "Kevlar" bekanntgeworden sind, oder auch durch eine Kombination dieser Fasern die große mechanische Festigkeit und Dauerhaftigkeit verliehen.

Vor dem Wickelvorgang werden die Endstükke zur Herstellung von Antriebswellen unterschiedlicher Länge auf dem Dorn mit dem jeweils gewünschten gegenseitigen Abstand festgelegt. Um eine Verhaftung der innersten Wickellagen an der blank polierten, gehärteten Oberfläche des aus einem Spezialstahl bestehenden Dornes zu verhindern und nach dem Aushärten des Kunststofftränkmittels das Abziehen der fertigen Antriebswelle von dem Dorn zu erleichtern, wird vor dem Aufschieben der Endstücke eine dünne Schicht eines Trennmittels, z. B. Silikonfett, auf die Dornoberfläche aufgebracht.

Nach einer anderen Herstellungsvariante wird zwischen den Endstücken ein entsprechend abgelängter Abschnitt eines aus faserverstärktem Kunststoff oder dergleichen vorgefertigten Rohres mit einer dem Dorndurchmesser entsprechenden lichten Weite und einem Querschnitt, welcher etwa jenem des Hülsenfortsatzes der Endstücke entspricht, angeordnet. Anschließend wird die erste Lage der mit dem flüssigen Kunststoff getränkten Faserverbände in einem Durchgang auf die Oberfläche des Hülsenfortsatzes der Endstücke sowie des Zwischenrohrabschnittes aufgebracht, gefolgt von mehreren, mit unterschiedlicher Steigung und einander gegenläufig kreuzenden Windungen aufgewickelten Lagen, bis zum Erreichen des für die zu übertragende Leistung erforderlichen Querschnittes. Sodann erfolgt die Aushärtung des die Welle bildenden, faserverstärkten Kunststoffes in der vorausgehend beschriebenen Weise, wobei sich die innersten Wickellagen mit den betreffenden Teilen der Endstücke und den dazwischen angeordneten Rohrabschnitt zu einer untrennbaren Einheit verbinden.

Bei dieser Verfahrensvariante, welche sich gut für Antriebswellen mit besonderen Querschnittsabmessungen eignet, kann der zwischen den Endstücken angeordnete Rohrabschnitt beim Aufbringen des faserverstärkten Kunststoffes die Aufgabe des Dornes übernehmen, wobei die Endstücke in eine drehbare Halterung eingespannt, und während des Wickelvorganges gegeneinander und somit gegen die Enden des dazwischen angeordneten Rohrabschnittes gedrückt werden. Dieser vorgefertigte Zwischenabschnitt kann gleich dem Hauptteil der Antriebswelle aus faserverstärktem Kunststoff, aber auch aus Hartpapier, Kunststoff oder Leichtmetall bestehen.

Unabhängig von der Art der Herstellung des mit den metallenen Endstücken versehenen Hauptteiles der Antriebswelle werden in jedem Falle danach die Verbindungseinrichtungen, wie insbesondere Jochteile von Kreuzgelenken, unmittelbar oder auch über rotationssymmetrische Adapterteile mit je einem entsprechenden Zentrierabschnitt passend in die Endstücke bis zur Anlage an der ebenen Außenfläche derselben eingesetzt und daran mittels umlaufender Schweiß- oder Lötnaht dauerhaft befestigt. Schließlich wird die durch das Anbringen der Verbindungseinrichtungen vervollständigte Antriebswelle bei hohen Drehzahlen ausgewuchtet, was durch stellenweises Abtragen von Material und/oder Einsetzen von Bleifüllungen in Bohrungen ihrer Metallteile, insbesondere der Endstükke erfolgen kann.

Auf diese Weise lassen sich die mit den Endstücken versehenen Hauptteile der Welle in verschiedenen genormten Längen herstellen und je nach Bedarf mit den jeweils erforderlichen Verbindungseinrichtungen bestücken.

Nachstehend ist die Erfindung anhand von in der Zeichnung veranschaulichten Ausführungsbeispielen unter Angabe weiterer Einzelheiten und der sich daraus ergebenden Vorteile näher erläutert. In der Zeichnung zeigt:

Fig. 1 teils im Längsschnitt und teilweise in Seitenansicht eine komplette Antriebswelle nach der Erfindung, einschließlich ihrer Verbindungseinrichtungen, wobei jedes ihrer Endstükke nach einer anderen Variante der Erfindung ausgebildetist;

Fig. 2 ebenfalls im Längsschnitt eine andere Ausführungsform eines Wellenendstückes mit entsprechender Anpassung des Hauptteiles der Welle und

Fig.3 in Ansicht eine andere Ausführungsvariante eines Wellenendstückes.

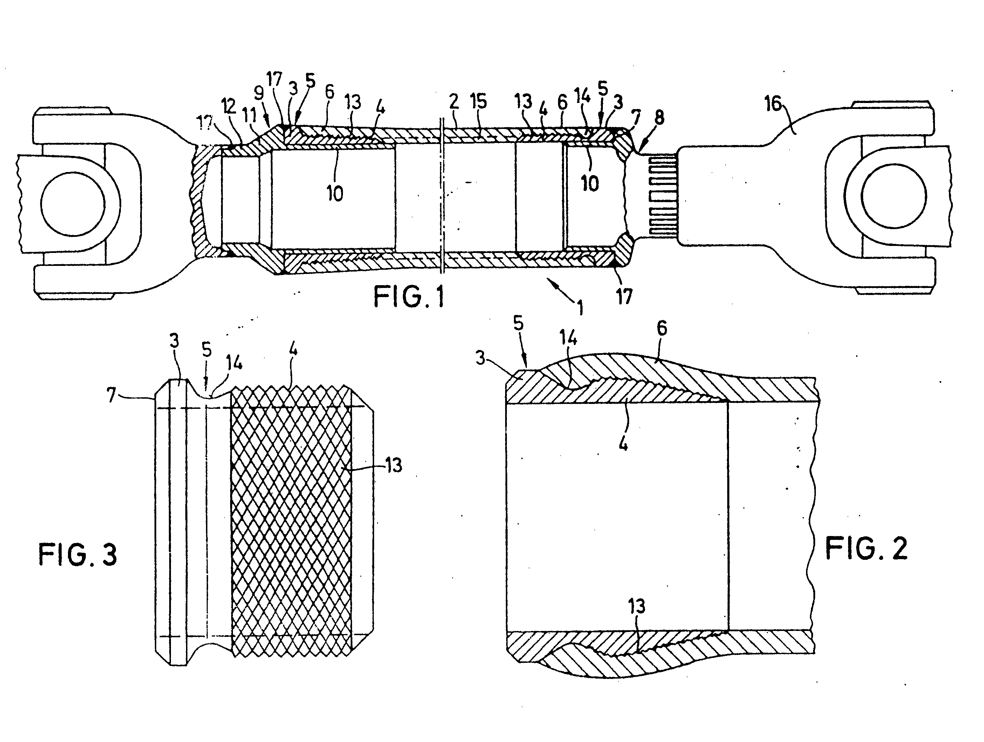

Die in Fig. 1 gezeigte Antriebswelle 1 besteht aus einem rohrförmigen Hauptteil 2 aus faserverstärktem Kunststoff, je einem Endstück 5 aus Metall und je einer an dieses mittelbar oder unmittelbar angeschweißten Verbindungseinrichtung 8, wie etwa das Jochteil eines Kreuzgelenkes oder ein genuteter Wellenstummel. Jedes der Endstücke 5 ist als rotationssymmetrisches Ringteil 3 mit einem Hülsenfortsatz 4 ausgebildet, welcher in dem betreffenden Endabschnitt 6 des Hauptteiles 2 verankert sowie von diesem fest umschlossen ist, so daß an jedem Ende des Hauptteiles 2 der Welle 1 allein der Ringteil 3 jedes seiner metallenen Endstücke 5 vorragt.

Wie in der linken Hälfte der Fig. 1 gezeigt, kann ein Adapterteil 9 mit einem Zentrierabschnitt 10 in das oder jedes Endstück 5 eingesetzt und mittels einer umfänglichen Schweißnaht 17 dauerhaft daran befestigt sein. Jedes Adapterteil 9 weist, entsprechend der anzuschließenden Verbindungseinrichtung 8, einen Zylinderabschnitt 12 unterschiedlichen Durchmessers und einen diesen mit dem Zentrierabschnitt 10 einstückig verbindenden Übergangsabschnitt 11 auf. An den mit einem Zentrierabsatz ausgebildeten Zylinderabschnitt 12 ist ebenfalls mittels einer Schweißnaht 17 oder auch mit einer hier nicht gezeigten umfänglichen Lötnaht die Verbindungseinrichtung 8 angeschlossen, die hier als Jochteil eines Kreuzgelenkes 16 dargestellt ist.

Bei der in Fig. 1 linksseitig gezeigten Ausführungsform des Endstückes 5 ist der Hülsenfortsatz 4 konisch gestaltet und an seiner Oberfläche gerändelt oder mit einer Wellung bzw. Zahnung ausgebildet, der sich der Endabschnitt 6 des Hauptteiles 2 bei dem Wickelvorgang zu dessen Ausbildung genau anpaßt, so daß auch in diesem Falle eine feste Verankerung erfolgt. Der wesentliche Vorteil dieser Ausführungsform liegt in der allmählichen Querschnittserweiterung in diesem Übergangsbereich des Drehmomentes vom metallenen zum faserverstärktem Kunststoffteil der Welle 1, und umgekehrt.

Die in der rechten Hälfte der Fig. 1 gezeigte Ausführungsform des Endstückes 5 unterscheidet sich von der vorausgehend beschriebenen dadurch, daß der Hülsenfortsatz 4 des Ringteiles 3 zylindrisch gestaltet und an seiner Oberfläche mit Gewinde 13 sowie im Bereich des Überganges zum Ringteil 3 mit einer Ringnut 14 ausgebildet ist. Gewinde 13 und Ringnut 14 dienen zur festen Verankerung des Endstückes 5 im Endabschnitt 6 des Hauptteiles 2 der Antriebswelle. Diese Ausführungsform des Endstückes 5 hat den Vorteil einer wirtschaftlichen Fertigung in großen Stückzahlen sowie einer besseren Anlage am betreffenden Ende eines vorgefertigten Zwischenrohrabschnittes, dessen Einsatz den Wickelvorgang beim Aufbringen des faserverstärkten Kunststoffes vereinfacht. Dieser kann so nämlich ohne vorheriges Ausfüllen des Raumes zwischen den Endstücken in einem Durchgang über die gesamte Länge des Hauptteiles 2 einschließlich seiner Endabschnitte 6, zwischen den endbegrenzenden Innenflächen der Ringteile 3 seiner Endstücke 5 erfolgen

An das in Fig. 1 rechte Wellenende ist unmittelbar eine Verbindungseinrichtung 8 in Form eines genuteten Wellenstummels mit einem in das Endstück 5 passenden Zentrierabschnitt 10 eingesetzt und daran mittels einer umlaufenden Löt- oder Schweißnaht 17 dauerhaft befestigt. Auf diesen Wellenstummel ist das Jochteil 16 eines Kreuzgelenkes, axial verschiebbar, aufgesetzt. Mit dieser Anordnung läßt sich ein großes Drehmoment übertragen, wobei bewegungsbedingte Veränderungen des Abstandes zwischen den durch die Antriebswelle 1 verbundenen Teilen, z. B. zwischen dem Getriebe und dem Differenzial eines sich fortbewegenden Fahrzeuges durch axiale Verschiebung des Jochteiles 16 an der Verbindungseinrichtung 8 ausgeglichen werden. Sofern die Verbindungseinrichtung 8 zum Endstück 5 passend ist, kann diese, wie dort gezeigt, direkt an dessen Ringteil 3 angeschweißt werden, wobei sich ein Adapterteil 9 erübrigt.

Die in Fig. 2 gezeigte Ausführungsform des Endteiles 5 ist ebenfalls mit einer konischen Außenfläche des Hülsenfortsatzes 4, jedoch einer stärker ausgeprägten Ringnut 14 im Bereich von dessen Übergang zum Ringteil 3 ausgebildet, wobei die konische Außenfläche des Hülsenfortsatzes 4 ebenfalls mit Unebenheiten wie Rändelung, Wellung oder Zahnung, beispielsweise mit einer Anzahl von Rillen geringer Tiefe ausgebildet ist. Diese Ausführungsform verbindet den Vorteil eines allmählichen Überganges im Querschnitt sowie dementsprechend des Drehmoments von der metallenen Anschlußeinrichtung zum Hauptteil aus faserverstärktem Kunststoff mit einer besonders festen Verankerung in diesem, zufolge der ausgeprägten Ringnut 14, in welche dieser mit seinem Endabschnitt fest eingebettet ist. Dadurch ist diese Ausführungsform auch besonders gut zur Aufnahme axialer Zugkräfte geeignet.

Die in Fig. 3 gezeigte Ausführungsform des Endstückes 5 ist der in Fig. 1 rechtsseitig gezeigten sehr ähnlich. Sie unterscheidet sich von dieser durch eine mäßige Neigung der inneren Stirnfläche ihres Ringteiles 3 sowie eine Berändelung ihrer zylindrischen Oberfläche. Dieses Endstück läßt sich beispielsweise auf Drehautomaten mit geringstmöglichem Kostenaufwand erstellen und ergibt in Verbindung mit dem Hauptteil aus faserverstärktem Kunststoff, der auch in die Ringnut 14 desselben eingreift, eine für alle üblichen Einsätze ausreichend feste Antriebswelle.

Bei allen Ausführungsformen wird die jeweils gewünschte Verbindungseinrichtung 8 direkt oder über ein Adapterteil 9 in jedes der Endstücke 5 bis zum Anschlag an dessen äußere Endfläche 7 eingesteckt und mittels umlaufender Schweißnaht 17 dauerhaft fest verbunden. Hierzu werden also die Wellen einschließlich der Endstücke 5 in großen Stückzahlen mit verschiedener Standartlänge vorgefertigt und in einem getrennten Arbeitsgang je nach Bedarf mit den jeweils erforderlichen Verbindungseinrichtungen bestückt. Dadurch erübrigt sich die Lagerung einer Vielzahl von Antriebs- insbesondere Gelenkwellen mit unterschiedlich gestalteten oder bemessenen Kreuzgelenk-Jochteilen oder dergleichen.

**Patentansprüche**

1. Antriebswelle, insbesondere Gelenkwelle für Motorfahrzeuge, mit einem rohrförmigen Hauptteil (2), bestehend aus in einer Matrix aus gehärtetem Kunststoff in mehreren wickelagen eingekapselten, hochfesten Fasern oder Faserverbänden, und mit vorgefertigten, in den Enden des Hauptteiles dauerhaft fest eingewickelten Endstükken (5) aus Metall, die als Rotationskörper mit je einem vom betreffenden Endabschnitt des Wellen-Hauptteiles umschlossenen Hülsenfortsatz (4) und mit einem hiervon vorragenden Abschnitt ausgebildet sind, wobei mit diesem oder einem zentriert daran festgeschweißten Adapterteil je eine metallene Verbindungseinrichtung, wie Jochteil eines Kreuzgelenkes fest verbunden, z. B. verschweißt oder verlötet ist, dadurch gekennzeichnet, daß

a) an dem Wellen-Hauptteil (2) die in der Kunststoff-Matrix eingekapselten hochfesten Fasern oder Faserverbände in den innersten und äußersten Wickellagen wendelförmig mit eng aufeinanderfolgenden Windungen möglichst geringer Steigung, hingegen in den Zwischenlagen mit einem Steigungswinkel zwischen 30° und 60° und einander gegenläufig kreuzenden Windungen der Fasern oder -Verbände aufeinanderfolgender Zwischenlagen angeordnet sind

b) bei jeden Endstück (5) der Hülsenfortsatz (4) von gleickbleibender lichter Weite ist und der vorragende Abschnitt jedes der Endstücke (5) als mit dem Hülsenfortsatz (4) einstückiger Ringteil (3) mit größerem Außendurchmesser jedoch gleicher lichter Weite wie dieser ausgebildet ist, an dessen innerer Stirnfläche die in der Kunststoff-Matrix eingekapselten Fasern oder -Verbände fest verhaftet sind, und

c) daß aus den beiden Endabschnitten (6) des Wellen-Hauptteiles (2) von den darin fest verankerten Endstücken (5) allein die mit etwa gleichem Außendurchmesser wie dieser ausgebildeten Ringteile (3) vorragen, deren innere Stirnfläche zugleich als Begrenzung und endseitiger Abschluß der Kunststoff/Faserlagen vorgesehen ist, und durch welche die daraus gebildeten empfindlichen Stirnflächen des Hauptteiles (2) vor äußeren Einflüssen geschützt sind.

2. Antriebswelle nach Anspruch 1, dadurch gekennzeichnet, daß in dem Hauptteil (2) aus faserverstärktem Kunststoff zwischen den einander kreuzenden Faserlagen wenigstens eine Lage eines mit dem gehärteten Kunststoff getränkten Faservlieses oder Gewebes aus den hochfesten Fasern angeordnet ist.

3. Antriebswelle nach Anspruch 1 oder 2, dadurch gekennzeichnet, daß die Fasern oder -Verbände der Zwischenlagen wendelförmig, mit einem Steigungswinkel von 45° und einander senkrecht kreuzenden Windungen aufeinanderfolgender Faserlagen angeordnet sind.

4. Antriebswelle nach einem der Ansprüche 1 bis 3, dadurch gekennzeichnet, daß der Hülsenfortsatz (4) jedes Endstückes (5), bei gleichbleibender lichter Weite seiner Bohrung mit vom Ringteil (3) gegen sein in das Innere des Hauptteiles (2) ragendes Ende abnehmenden Querschnitt, z. B. konisch oder mit stufenförmigen Absätzen bzw. wenigstens einer kurvenförmigen Krümmung des Profiles seiner Oberfläche ausgebildet ist.

5. Antriebswelle nach einem der Ansprüche 1 bis 3, dadurch gekennzeichnet, daß der Hülsenfortsatz (4) jedes Endstückes (5) vorzugsweise zylindrisch und umgänglich mit Gewinde (13) oder einer Anzahl stellenweise unterbrochener Unebenheiten, wie Rändelung, Wellung oder Zahnung wenigstens eines Bereiches einer Oberfläche ausgebildet, und das Ringteil (3) an seiner äußeren Endfläche (7) umfänglich abgeschrägt ist.

6. Antriebswelle nach einem der Ansprüche 1 bis 5, dadurch gekennzeichnet, daß der Hülsenfortsatz (4) im Bereich des Uberganges zum Ringteil (3) mit einer umlaufenden Ringnut (14) ausgebildet ist.

7. Verfahren zur Herstellung einer Antriebswelle nach einem der Ansprüche 1 bis 6, wobei auf einen zur Rotation antreibbaren, zylindrischen Dorn vorgefertigte Endstücke aufgeschoben und daran mit dem jeweils gewünschten gegenseitigen Abstand festgelegt werden, und sodann mit einem durch Wärmeeinwirkung aushärtbaren Kunststoff getränkte, hochfeste Fasern oder -Verbände auf die zwischen den Endstücken frei belassene Dornoberfläche sowie die einzufassenden Endstückabschnitte aufgebracht, und zur Aushärtung des Kunststoffes erhitzt werden, und nach dessen Aushärten die fertige Antriebswelle vom Dorn abgezogen wird, dadurch gekennzeichnet,daß

a) vor dem Aufschieben der Endstücke (5) auf die Dornoberfläche eine dünne Schicht eines Trennmittels, z. B. Silikonfett, aufgebracht wird,

b) der Dorn nach dem Aufschieben der Endstücke (5) erwärmt und vor dem Abziehen der Antriebswelle gekühlt wird, und

c) daß die hochfesten Fasern oder Faserverbände wie Bündel, Gewebe oder Vliese in mehreren; zur Drehachse unterschiedlich geneigten Lagen aufgebracht werden.

8. Verfahren zur Herstellung einer Antriebswelle nach einem der Ansprüche 1 bis 6, wobei zwischen den Endstücken ein entsprechend der jeweils gewünschten Antriebswellenlänge, abzüglich der Länge der beiden Endstücke abgelängter rohrförmiger Einweghohldorn eingesetzt wird, dadurch gekennzeichnet, daß der Abschnitt eines aus faserverstärktem Kunststoff mit einer dem Dorndurchmesser entsprechenden lichten Weite und einem etwa der inneren Begrenzungsfläche des Hülsenfortsatzes (4) der Endstücke (5) entsprechendem Querschnitt vorgefertigten Rohres (15) zwischen diesen angeordnet, und die erste Lage der mit dem flüssigen Kunststoff getränkten Fasern oder Faserverbände in einem Durchgang auf die Oberfläche des Hülsenfortsatzes (4) der Endstücke (5) sowie des Zwischenrohrabschnittes (15) aufgebracht werden.

**Claims**

1. A drive shaft, in particular a universal joint shaft for motor vehicles with a tubular main part (2), consisting of high-strength fibres or fibre bindings, embedded in a matrix made of hardened plastics material in a plurality of winding layers, and with prefabricated metal end pieces (5) which are permanently securely wound into the ends of the main part and which are in the form of bodies of rotation each with a sleeve extension (4) enclosed by the respective end section of the main part of the shaft and with a section projecting from the sleeve extension, in each case a metallic connecting device, such as the yoke part of a universal joint, being firmly connected, e.g. welded or soldered, to this section or a firmly welded adapter part centred thereon, characterized in that

a) on the main part (2) of the shaft, the highstrength fibres or fibre bindings embedded in the plastics material matrix are disposed in the innermost and outermost winding layers in the form of a coil with turns which are in close succession and which have as small a pitch as possible, but in the intermediary layers with a pitch angle between 30° and 60° and with turns of the fibres or fibre bindings of consecutive intermediary layers crossing each other in opposite directions;

b) in each end piece (5) the sleeve extension (4) is of constant inside diameter and the projecting section of each end piece (5) is formed as a ring part (3) in one piece with the sleeve extension (4) with a greater outer diameter than the sleeve extension (4) but with a similar inside diameter thereto, and the fibres or fibre bindings embedded in the plastics material matrix firmly adhere to the inner front face of the projecting section, and

c) only the ring parts (3) of the end pieces (5) firmly anchored in the main part (2) of the shaft, which are formed with approximately the same outer diameter as the end pieces (5), project from the two end sections (6) of the main part (2) of the shaft, the inner front faces of these ring parts being provided both as a boundary and as an end closure for the plastics material/fibre layers and the ring parts protecting the sensitive main part (2) front faces formed therefrom from external influences.

2. A drive shaft according to claim 1, characterized in that at least one layer of a non-woven or woven fabric made of the high-strength fibres and impregnated with the hardened plastics material is disposed between the fibre layers crossing each other in the main part (2) made of fibre-reinforced plastics material.

3. A drive shaft according to claim 1 or 2, characterized in that the fibres or fibre bonds of the intermediary layers are disposed in the form of a coil with a pitch angle of 45° and turns of consecutive fibre layer crossing each other in a perpendicular manner.

4. A drive shaft according to one of claims 1 to 3, characterized in that the sleeve extension (4) of each end piece (5) is formed with a cross section decreasing from the ring part (3) towards its end projecting into the inside of the main part (2), eg the cross section is formed conically or with offset parts in the form of steps or at least with a curve-shaped bend of the profile of its surface, the inside diameter of the bore of the sleeve extension remaining the same.

5. A drive shaft according to one of claims 1 to 3, characterized in that the sleeve extension (4) of each end piece (5) is preferably cylindrical in shape and is formed on the periphery with a thread (13) or a plurality of uneven portions, such as knurling, corrugation or toothing, - interrupted in places - of at least one area of its surface, and on its periphery the ring part (3) is bevelled at its outer end surface (7).

6. A drive shaft according to one of claims 1 to 5, characterized in that the sleeve extension (4) is formed with a circulating annular groove (14) in the area of the transition to the ring part (3).

7. A method for manufacturing a drive shaft according to one of claims 1 to 6 in which, prefabricated end pieces are pushed onto a cylindrical mandrel which can be driven so as to rotate and are secured thereon at the mutual distance desired in each case, and subsequently highstrength fibres or fibre bindings, impregnated with plastics material which can be hardened by the effect of heat, are applied to the surface of the mandrel left free between the end pieces and to the end piece sections to be enclosed and are heated up to harden the plastics material, and after the hardening thereof the finished drive shaft is removed from the mandrel, characterized in that

a) before pushing the end pieces (5) onto the mandrel surface, a thin layer of a release agent, eg silicon grease is applied;

b) after pushing on the end pieces (5), the mandrel is heated up and before removing the drive shaft, the mandrel is cooled; and

c) the high strength fibres or fibre bindings such as bundles, woven fabrics or non-woven fabrics are applied in a plurality of layers variously inclined to the axis of rotation.

8. A method for manufacturing a drive shaft according to one of claims 1 to 6 in which a tubular non-reusable hollow mandrel which is cut to size corresponding to the length of the drive shaft desired in each case, less the length of the two end pieces, is inserted between the end pieces, characterized in that the section of a prefabricated tube (15) made of fibre-reinforced plastics material with an inside diameter corresponding to the diameter of the mandrel and a cross section corresponding approximately to the inner boundary area of the sleeve extension (4) of the end pieces (5) is disposed therebetween, and the first layer of the fibres or fibre bonds impregnated with the liquid plastics material is applied in one pass to the surface of the sleeve extension (4) of the end pieces (5), and of the intermediarytube section (15).

## Revendications

1°) Arbre d'entraînement, notamment arbre articulé pour véhicules automobiles, avec une pièce principale (2) de forme tubulaire constituée en fibres ou bandes de fibres à haute résistance mécanique, incorporées en plusieurs couches et enroulement dans une matrice en matière synthétique durcie et avec des pièces d'extrémités (5) en métal préfébriquées, fermement enveloppées à demeure dans des extrémités de la pièce principale qui sont constituées comme des corps de rotation avec chacun un appendice en forme de manchon (4) entouré par la portion d'extrémité correspondante de la pièce d'arbre principale, et ayant une portion saillante hors de celle-ci, avec laquelle, ou avec une pièce d'adaptation centrée, soudée sur elle, est relié rigidement par exemple par soudage à l'étain ou à fusion, un dipsositif de jonction métallisé, telle que la pièce de joug d'une articulation Cardan, arbre caractérisé en ce que:

a) dans la pièce d'arbre principale (2), les fibres ou bandes de fibres à haute résistance, incorporées dans la matrice en matière synthétique, sont disposées dans les couches la plus intérieure et la plus extérieure, en forme d'enroulements à spires, étroitement rapprochées et à pas le plus faible possible, par contre, dans les couches intermédiaires, les spires d'enroulement de fibres ou bandes de fibres sont disposées avec un angle d'inclinaison compris entre 30 et 60 degrés et se croisant entre-elles,

b) pour chaque pièce d'extrémité (5), l'appendice en forme de manchon (4) présente un alésage constant et la portion saillant de chacune des pièces d'extrémité (5) est constituée comme une pièce annulaire (3), en une seule pièce avec l'appendice en forme de manchon (4), ayant un diamètre extérieur supérieure, mais un diamètre intérieur identique à ce manchon, portion sur la face frontale intérieure de laquelle sont fixées solidement les fibres ou bandes de fibres incorporées dans la matrice,

c) à partir des deux portions d'extrémité (6) de la pièce d'arbre principale (2) et par rapport aux pièces d'extrémité (5) solidement ancrées en elles, seule fait saillie la pièce annulaire (3) constituée avec le même diamètre exterieur que celles-ci, et dont la face frontale intérieure sert en même temps de limitation et de fermeture, côté extrémité, pour l'ensemble des couches de fibres/matière synthétique, et par laquelle les surfaces frontales sensibles de la pièce principale (2) ainsi formées sont protégées contre les influences extérieures.

2. Arbre d'entraînement suivant la revendication 1, caractérisé en ce que, dans la pièce principale (2) en matière synthétique renforcée de fibres, entre les couches de fibres se croisant, est disposée au moins une couche d'une mèche de fibres ou d'un tissu en fibres à haute résistance, imprégnée avec la matière synthétique durcie.

3. Arbre d'entraînement suivant l'une des revendications 1 ou 2, caractérisé en ce que les fibres ou bandes des fibres des couches intermédiaires sont enroulées en hélice avec un angle d'inclinaison de 45 degrés et les spires se croisent perpendiculairement entre elles dans les couches de fibres superposées.

4. Arbre d'entraînement suivant l'une quelconque des revendication 1 à 3, caractérisé en ce que l'appendice en forme de manchon (4) de chaque pièce d'extrémité (5), est constitué, en conservant le même diamètre de son alésage, avec une section transversale diminuant à partir de la pièce annulaire (3) vers son extrémité saillante à l'intérieur de la pièce principale (2), par exemple coniquement ou en forme d'échelons, ou avec au moins une courbure du profil de sa surface extérieure.

5. Arbre d'entraînement suivant l'une quelconque des revendications 1 à 3, caractérisé en ce que l'appendice en forme de manchon (4) de chaque pièce d'extrémité (5) est de préférence cylindrique et présente, au début, au moins une partie de sa surface extérieure pourvue d'un filetage (13) ou de plusieurs irrégularités espacées par endoits telles que cannelures, ondulations ou dentures et la pièce annulaire (3) est, au début, biseautée sur sa surface extérieure d'extrémité (7).

6. Arbre d'entraînement suivant l'une quelconque des revendications 1 à 5, caractérisé en ce que l'appendice en forme de manchon (4) est pourvu, dans la zone de transition vers la pièce annulaire (3), d'une gorge annulaire circulaire (14).

7. Procédé pour la fabrication d'un arbre d'entraînement suivant l'une quelconque des revendications 1 à 6, par lequel, sur un mandrin cylindrique pouvant être entraîné en rotation, on enfile des pièces d'extrémité préfabriquées, qu'on immobilise à un espacement désiré, et, ensuite, on applique, sur les surfaces du mandrin laissées libres entre les pièces d'extrémité ainsi que sur les portions d'extrémité, des fibres ou bandes de fibres à haute résistance, imprégnées avec une matière synthétique durcissable par la chaleur, et on chauffe l'ensemble pour durcir la matière synthètique, après quoi on retire du mandrin l'arbre d'entraînement terminè de fabrication, procédé caractérisé en ce que:

a) avant l'enfilage des pièces d'extrémité (5), on applique, sur la surface extérieure du mandrin une mince couche d'un produit de séparation, par exemple une graine de silicone,

b) après enfilage des pièces d'extrémité (5), le mandrin est chauffé et il est refroidi avant l'extraction de l'arbre d'entraînement formé.

c) les fibres ou bandes de fibres à haute résistance tels que faisceaux, tissu ou mèches, sont appliqués en plusieurs couches avec inclinaisons différentes par rapport à l'axe.

8. Procédé pour la fabrication d'un arbre d'entraînement conforme à l'une quelconque des revendications 1 à 6, par lequel, entre les pièces d'extrémité, est mis en place un mandrin creux à une voie de forme tubulaire, correspondant à la longueur d'arbre d'entraînement désirée avec déduction de la longueur des deux pièces d'extrémité, procédé caractérisé en ce qu'on met en place, entre les pièces d'extrémité (5), un tronçon de tube (15) préfabriqué, constitué en une matière synthétique renforcée de fibres de verre, ayant un diamètre intérieur correspondant au diamètre de l'alésage du mandrin, et une section transversale correspondant à la surface de limitation intérieure de l'appendice en forme de manchon (4) des pièces d'extrémité (5) et la première couche des fibres ou bandes di fibres imprégnées avec la matière synthétique liquide, est appliquée en une seule passe opérationelle sur la surface extérieure de l'appendice en forme de manchon (4) des pièces d'extrémité (5) ainsi que sur le tronçon de tube intermédiaire rapporté (15).

FIG.1

FIG.3

FIG.2

0 029 093